# EUROPÄISCHE PATENTSCHRIFT

(11) **EP 0 656 523 B1**
(45) Veröffentlichungstag und Bekanntmachung des Hinweises auf die Patenterteilung: **22.07.1998**
(21) Anmeldenummer: 94118547.2
(22) Anmeldetag: 25.11.1994
(51) Int. Cl.: G01B 5/28, G01N 27/90

(54) **Vorrichtung zur meridionalen Abtastung von Kugeloberflächen**
Device for meridional sensing spherical surface
Dispositif pour sondage méridional de surface sphérique

(30) Priorität: 03.12.1993 DE 4341198
(43) Veröffentlichungstag der Anmeldung: 07.06.1995
(73) Patentinhaber: Forschungszentrum Rossendorf e.V., D-01474 Rossendorf (DE)
(72) Erfinder: Schlenk, Rainer, D-01324 Dresden (DE); Wustmann, Bernd, D-01324 Dresden (DE)

(56) Entgegenhaltungen:
- DE-A- 1 573 840
- DE-A- 3 148 609
- DE-A- 3 905 430
- DE-C- 1 066 365
- GB-A- 2 253 275
- US-A- 3 361 961
- US-A- 5 223 793

## Beschreibung

Die Erfindung betrifft eine Vorrichtung zur möglichst lückenlosen Abtastung von Kugeloberflächen durch meridionale Drehbewegung der Kugel bei ortsfester Anordnung eines Tastkopfes, Sensors oder dergleichen. Entsprechende Aufgaben bestehen beispielsweise auf dem Gebiet der Prüftechnik zur Kontrolle der Qualität von Stahlkugeln z.B. auf Risse, Geometrie- oder Oberflächenfehler sowie u.a. beim Laserhärten der oberflächennahen Randzone von Spezialkugeln oder etwa beim Einprägen (Einbrennen) von Informationsträgern in Kugeloberflächen.

Aus der CS-PS 123 081 ist eine Vorrichtung bekannt, bei der die abzutastende Kugel von einer Steuerrolle und einer Stützrolle geführt, und von einer Reibrolle fortwährend angetrieben wird, wobei sich die Rotationsachse der Kugel bezüglich einer gedachten Markierung auf der Kugeloberfläche durch den Einfluß der Steuerrolle von Umdrehung zu Umdrehung geringfügig ändert (meridionale Drehbewegung der Kugel), so daß schließlich die gesamte Oberfläche der Kugel an einem ortsfesten Punkt an dem z. B. ein Sensor angeordnet ist, vorbeibewegt wird. Dabei ist die spezifisch angepaßte Geometrie der Steuerrolle von entscheidender Bedeutung. Diese besteht aus zwei sich gegenüberliegenden, starr miteinander verbundenen Kegeln, deren Kegelwinkel sich sinusförmig ändert und dabei um den Wert von 45 Grad symmetrisch schwankt, wobei ein Umlauf des Kegelmantels einer Sinusperiode entspricht. Die Kugel wird hierbei zwischen Reibrolle, Stützrolle und Steuerrolle unter Beachtung definierter Winkelverhältnisse federnd eingeklemmt und über Reibkontakt zur Rotation gezwungen.
Diese Steuerrolle stellt ein kompliziertes Präzisionsteil mit extremen Anforderungen an die Fertigungsgenauigkeit dar. Ihre Fertigung ist sehr aufwendig und kostenintensiv. Darüber hinaus ist diese Steuerrolle ein ausgesprochenes Verschleißteil, da gleichzeitig zur Rollreibung auch Gleitreibung (Bohrreibung) auftritt, was selbst bei Verwendung von Hartmetall zu frühzeitigem Verschleiß und damit Fehlern bei der Abtastung und recht schnell zum völligen Ausfall führt (Laufzeit maximal 200 Stunden).
Die geometrischen Randbedingungen zur Kugelhalterung und -führung ergeben eine ungünstige Zugänglichkeit zur Kugeloberfläche, so daß Einschränkungen bezüglich der Anzahl von Sensoren bestehen. Diese müssen außerdem bei jedem Kugelwechsel zur Seite geschwenkt werden, was den technologischen Durchlauf größerer Kugelmengen pro Zeiteinheit erschwert.

In der US-PS 5 223 793 werden ein allgemeiner Überblick über eine Reihe von prinzipiellen Möglichkeiten zur Erzeugung der gewünschten Meridionalbewegung aufgelistet sowie einige methematisch-physikalische Zusammenhänge zwischen Bewegungseinleitung und Spurbildung auf der Kugeloberfläche abgeleitet. So wird gezeigt, daß bei Nichteinhaltung der Idealbedingungen (s. u.) mehr oder weniger große Oberflächenbereiche der Kugel nicht abgetastet werden.

Allen in der US-PS vorgestellten Varianten ist gemeinsam, daß sämtliche an der Bewegungserzeugung beteiligten Kegel- oder Zylinderrollen raumfeste Achsrichtungen besitzen und die gewünschte Meridionalbewegung der Kugel durch Variation der Rotationsgeschwindigkeit dieser Rollen über eine elektronische Steuerung erfolgt. Dabei ist der Steuerungsaufwand an Elektronik und Software sehr hoch. Die Vielzahl von Bewegungen rotatorischer und translatorischer Art, die mit hoher Präzision aufeinander abgestimmt erfolgen müssen, bergen die Gefahr, daß sich Ungenauigkeiten in der Steuerung (bzw. in der Mechanik) zu größeren Fehlern aufsummieren, die schließlich die Zuverlässigkeit einer solchen Anordnung für den Großserien- bzw. robusten Fertigungseinsatz in Frage stellen. Außerdem ist eine Vielzahl von Präzisionsbaugruppen (Lagerstellen, Lineareinheiten) erforderlich, die einen hohen Herstellungsaufwand verursachen.

Aufgabe der Erfindung ist es, die meridionale Kugelbewegung mittels einer die o.g. Nachteile vermeidenden Vorrichtung durch eine neue Gestaltung der Einkopplung der Meridionalbewegung zu erreichen.

Mit der Erfindung wird diese Aufgabe durch die in den Patentansprüchen dargelegte Vorrichtung gelöst.

Die erfindungsgemäße Vorrichtung kommt aufgrund der neuen Kugelsteuerung ohne hochgenaue, kompliziert gestaltete Präzisionsteile aus. Es ist lediglich erforderlich, den Antriebszylinder mit dem gleichen Durchmesser wie die Kugel herzustellen (zulässige Abweichung ca. 0,1 %). Dies stellt keine Schwierigkeit dar und ermöglicht enorme Kostenvorteile.
Da die erfindungsgemäße Kugelsteuerung auf der Anwendung reiner Rollreibung zwischen Kugeloberfläche und Antriebszylinder sowie den Steuer-Zylinderrollen basiert, wird ein Verschleiß weitgehend vermieden. Ein weiterer Vorteil des neuen Verfahrens liegt in der Möglichkeit, einen Kugelwechsel relativ einfach zu automatisieren. Dabei ist es besonders günstig, daß die Sensoren an Ort und Stelle (Meßposition) verbleiben können. Die geometrisch günstige Gestaltung erlaubt dabei sogar die gleichzeitige Anordnung mehrerer Sensoren bzw. Tastköpfe zur Ermittlung verschiedener Oberflächenkennwerte der zu untersuchenden Kugel.
Die Spurbreite und damit die Abtastdichte läßt sich durch entsprechende Hebelgestaltung z.B. mittels veränderlicher Hebellänge durch einstellbaren Anlenkungspunkt variabel ausführen. Dies ermöglicht die einfache Anpassung der erfindungsgemäßen Vorrichtung an veränderliche Aufgabenstellungen. Mit der Steuerrolle nach der CS-PS ist eine Variation der Abtastspur nicht möglich.
Aufgrund der Funktionstrennung von Kugelhalterung und Steuermechanik ist insbesondere auch eine Miniaturisierung der Mechanik möglich, wobei Kugeln mit weit unter 3 mm Durchmesser untersucht werden können. Dies wird dadurch unterstützt, daß ein größerer Oberflächenbereich der Kugel von Bauelementeüberdeckungen freibleibt und sich damit die Zugänglichkeit auch für relativ große Sensoren wesentlich verbessert (1:1,5).

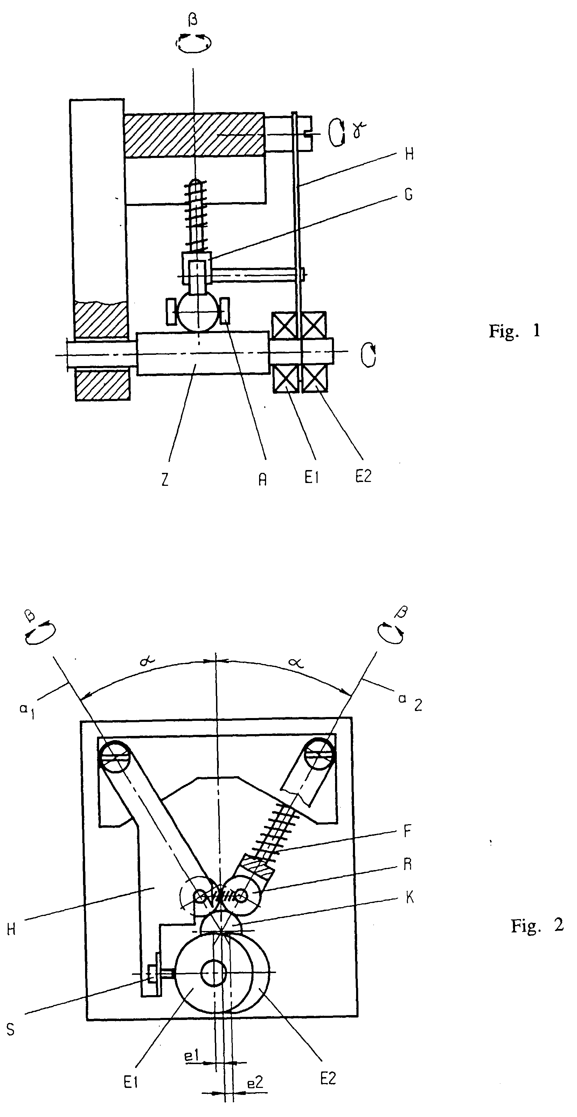

Die Erfindung wird nachfolgend an einem Ausführungsbeispiel näher erläutert. In der dazugehörigen Zeichnung zeigen
Fig. 1 und Fig. 2 eine Vorder- bzw. Seitenansicht der erfindungsgemäßen Vorrichtung
Fig. 3 das Schema der meridionalen Abtastung einer Kugeloberfläche,
Fig. 4 eine Ausführungsvariante mit der Möglichkeit eines automatisierten Kugelwechsels.

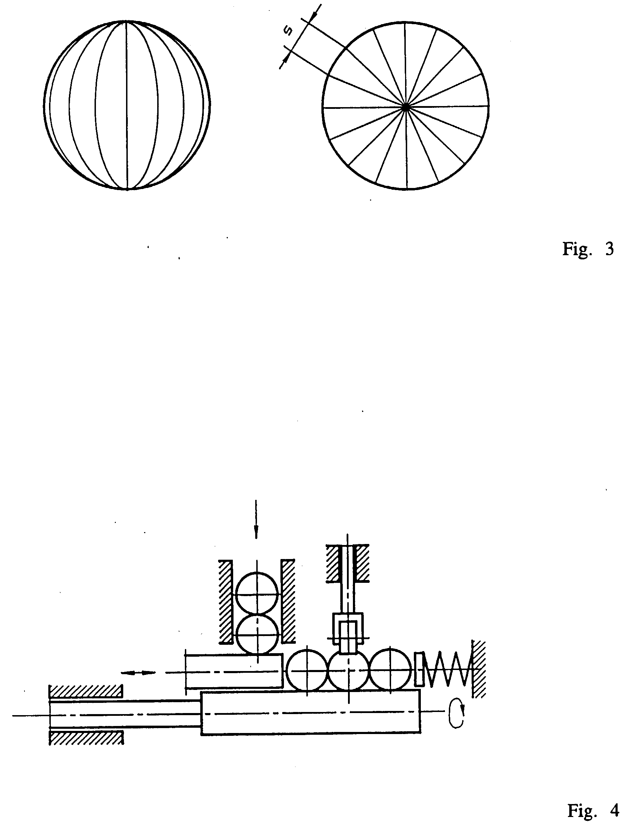

Auf einem um seine Symmetrieachse rotierenden Antriebszylinder Z mit dem Durchmesser D befindet sich im Reibkontakt die zu drehende Kugel K, welche in Längsrichtung des Antriebszylinders durch zwei Anschläge A in Form von z. B. Zylinderstiften oder Kugeln mit gehaltert wird. Auf die Oberfläche der Kugel drücken (mittels elastischer Kraft) symmetrisch zur Verbindungslinie Kugelmitte - Antriebszylinderachse zwei Steuerzylinderrollen R unter dem Winkel Alpha, wodurch ein seitliches Ausweichen der Kugel in einer Ebene senkrecht zur Antriebszylinderachse verhindert wird. Die Andruckkraft wird z. B. durch Federn F, Gewichte oder Flüssigkeits- bzw. Gasdruck erzeugt. Die Achsen dieser, im Beispiel durch Kugellager dargestellten Steuerzylinderrollen, sind in Gabeln G gelagert, welche sich um die Steuerachsen a1, a2 bewegen lassen. Um eine oder beide dieser Achsen a1, a2 erfolgt als Lenkbewegung eine symmetrische Pendelbewegung mit dem Amplitudenwinkel Beta (0° < Beta < Betaₘₐₓ, mit Betaₘₐₓ ca. 10° ... 20°) genau synchron mit der Kugeldrehung. Werden beide Rollen gelenkt, so erfolgt die Lenkbewegung zueinander in Gegenphase, also mit einer Phasenverschiebung von 180 Grad. Die Einkopplung der Lenkbewegung auf die gesteuerten Rollen R erfolgt in z.B. durch Hebel H mit dem Pendelwinkel Gamma auf die verlängerten Achsen dieser Rollen, wobei die Hebel z.B. durch Exzenter E1, E2, realisiert durch exzentrisch gelagerte Kugellager mit feststehendem Außenring, oder Nocken auf der Achse des Antriebszylinders Z in Bewegung gesetzt werden. Die Abtastung der Exzenter oder Nocken erfolgt beispielsweise durch Stellschrauben S, wobei die Rückführung der Hebel durch Federn mit Fußpunkt auf einer ortsfesten Grundplatte oder durch eine Zugfeder erfolgen kann, die zwischen den Hebeln H oder zwischen den verlängerten Achsen der gesteuerten Rollen angeordnet wird. Sollen beide Rollen R gesteuert werden, was für einen reibungsarmen, störungsfreien und präzisen Bewegungsablauf vorzuziehen ist, müssen, um die oben beschriebene Kinematik zu erfüllen, die Exzenter E1, E2 um 180 Grad versetzt angeordnet und in der Amplitude möglichst gleich, sowie die Hebel H gleich lang sein (e1 = e2). Die Durchmesser des Zylinders Z und der Kugel K müssen dann gleich groß sein, wenn das Übersetzungsverhältnis der Reibübertragung i = 1 gewählt wurde. Jede Abweichung von i=1 führt zu Fehlern in der Spurenaufzeichnung dergestalt, daß sich im Bereich der Spurkreuzungen (Pole) Flächenstücke als unbeschrieben bzw. unabgetastet erweisen, die ggfs. größer als zulässig ausfallen. Ein zulässiges Maß hierfür könnte die vorgegebene Spurbreite sein. Wie in Fig. 3 dargestellt, ist die Spurbreite s der maximale Abstand zweier benachbarter Spuren bzw. Rollbahnen in Äquatorhöhe. Diese Spurbreite wird durch den Pendelwinkel Beta bestimmt.
Um z.B. eine lückelose Erfassung von Qualitätsmerkmalen auf der Kugeloberfläche sowie dicht darunter vorzunehmen, wird durch einen Wirbelstromsensor zur Rißerkennung und einen optischen Sensor zur Erfassung der optischen Oberflächengüte nach dem Reflexprinzip eine berührungsfreie Abtastung der Oberfläche durchgeführt, wobei die Spurbreite s der Meridionalbewegung geringer als die kleinere der Erfassungsbreiten (Sichtbreite) der Sensoren eingestellt wird.

In Fig. 3 ist eine Ausführungsvariante der Erfindung dargestellt, wie sie z.B. in automatisierten Fertigungs- bzw. Prüfsystemen zum Einsatz kommen kann. Dabei werden die für die Kugelhalterung erforderlichen Anschläge durch im technologischen Ablauf vor- bzw. nachgelagerte Kugeln der gleichen Größe wie die abzutastende Kugel gebildet. Der Kugelwechsel erfolgt durch zyklisches Weiterschieben immer neuer Kugeln mittels z. B. Hubkolben aus einer Zuführrinne in die Meßposition entlang einer Parallelen zur Antriebszylinderachse. Auf diese Weise wird die bereits ausgemessene Kugel als Anschlag für die nachfolgend zu vermessende Kugel benutzt, die darauf folgende dient jeweils als zweiter Anschlag, so daß eine Automatisierung des Kugelwechsels möglich wird. Die Kugeln werden beim Verschieben längs der Zylinderachse in geeigneten Kulissen bzw. Begrenzungen geführt, so daß der beschriebene Bewegungsablauf zwangsweise zustandekommt.

## Patentansprüche

1. Vorrichtung zur meridionalen Abtastung von Kugeloberflächen bei der die mit Hilfe eines Sensors abzutastende Kugel (K) von einem rotierenden Zylinder (Z) im Reibkontakt angetrieben wird und in Längsrichtung dieses Zylinders (Z) durch zwei Anschläge (A), in Querrichtung durch zwei Zylinderrollen, gehaltert ist, und bei der zusätzliche Steuereinrichtungen (E₁,E₂,S,H) vorgesehen sind, mittels derer die Kugel (K) mit einer zweiten, senkrecht auf der Achse der Antriebsbewegung stehenden Drehbewegung überlagert wird,
dadurch gekennzeichnet, daß zur Vermittlung dieser zweiten Drehbewegung zwei auf der Kugeloberfläche mitlaufende Steuerzylinderrollen (R) unter einem Winkel Alpha symmetrisch zur Verbindungslinie Kugelmitte - Antriebszylinderachse angeordnet sind, wobei Alpha zwischen 0 und 90° beträgt und in einer Ebene senkrecht zur Rotationsachse des Zylinders (Z) liegt, und wobei mindestens eine der Steuerzylinderrollen (R) lenkbar um die durch den Winkel Alpha vorgegebene Lenkachse (a₁,a₂) ausgeführt ist, und eine Lenkbewegung mit dem Amplitudenwinkel Beta zwischen 0 und 20° genau synchron mit dem Kugelantrieb eingekoppelt ist und daß mindestens ein Sensor eingesetzt ist.

2. Vorrichtung nach Anspruch 1, dadurch gekennzeichnet, daß beide Steuerzylinderrollen (R) lenkbar angeordnet sind und ihre Lenkbewegung zueinander mit einer Phasenverschiebung von 180 Grad in Gegenphase erfolgt.

3. Vorrichtung nach Anspruch 1, dadurch gekennzeichnet, daß die Einkopplung der Lenkbewegung auf die Steuerzylinderrollen (R) durch Hebel (H) mit dem Pendelwinkel Gamma zwischen 0 und 30° auf die verlängerten Achsen dieser Steuerzylinderrollen (R) erfolgt, wobei die Hebel (H) direkt durch mit dem Zylinder (Z) verbundene Auslenkeinrichtungen bewegt werden.

4. Vorrichtung nach Anspruch 1, dadurch gekennzeichnet, daß Mittel vorgesehen sind mittels derer die Steuerzylinderrollen (R) elastisch auf die Oberfläche der Kugel (K) gedrückt werden.

5. Vorrichtung nach Anspruch 1, dadurch gekennzeichnet, daß die Anschläge (A) zur Kugelhalterung durch im technologischen Ablauf vor- bzw. nachgelagerte Kugeln der gleichen Größe gebildet werden.

## Claims

1. A device for meriodional scanning of spherical surfaces, in which the sphere (K) to be scanned with the aid of a sensor is driven by frictional contact with a rotating cylinder (Z) and which is supported in longitudinal direction of that cylinder (Z) by two limit stops (A) and in transverse direction by two cylindrical rollers, and which is equipped with additional control devices (E₁, E₂, S, H), by which the sphere (K) is superimposed with a second rotating motion acting vertically on the axis of the drive motion,
characterized by the fact that, for the transmission of this second rotating motion, two control cylinder rollers (R) following on the surface of the sphere are arranged symmetrically under an angle Alpha to the connecting line between the center of the sphere and the axis of the drive cylinder, whereat Alpha is between 0° and 90° and lies in the same plane with the rotation axis of the cylinder (Z) and whereat at least one of the control cylinder rollers (R) is designed steerable about the steering axis determined by angle Alpha (a₁, a₂), and a steering motion with the amplitude angle Beta between 0° and 20° is coupled exactly synchronous with the drive of the sphere and that at least one sensor is used.

2. Device according to Claim 1, characterized by the fact that both control cylinder rollers (R) are arranged steerable and that their steering motion to each other takes place with a phase lead of 180° in opposite phase.

3. Device according to Claim 1, characterized by the fact that the coupling of the steering motion on the control cylinder rollers (R) takes place through lever (H) with the pendulum angle Gamma between 0° and 30° on the extended axis of these control cylinder rollers (R), whereat the levers (H) are moved directly by the linkage devices connected to cylinder (Z).

4. Device according to Claim 1, characterized by the fact that means are provided by which the control cylinder rollers (R) are pressed elastically against the surface of sphere (K).

5. Device according to Claim 1, characterized by the fact that the limit stops (A) are formed by spheres of the same size located upstream and downstream in the technological process.

## Revendications

1. Dispositif pour la palpation méridienne de surfaces sphériques au cours de laquelle la bille (K) qui doit être palpée à l'aide d'un détecteur est entraînée par un cylindre rotatif (Z) par contact de friction et maintenue par deux butées (A) dans le sens longitudinal de ce cylindre (Z) et par deux rouleaux de cylindre dans le sens transversal et au cours de laquelle des dispositifs de commande supplémentaires (E₁, E₂, S, H) sont prévus, au moyen desquels la bille (K) est soumise à un deuxième mouvement de rotation vertical par rapport à l'axe du mouvement d'entraînement,
caractérisé par le fait que, pour transmettre ce deuxième mouvement de rotation, deux rouleaux de cylindre de commande (R) tournant sur la surface sphérique sont disposés selon un angle alpha et symétriquement par rapport à la ligne de liaison centre de la bille - axe du cylindre moteur, alpha étant compris entre 0 et 90° et situé dans un plan vertical par rapport à l'axe de rotation du cylindre (Z) et l'un des rouleaux de cylindre de commande (R) au moins étant orientable autour de l'axe directeur donné par l'angle alpha (a₁, a₂), et par le fait qu'un mouvement directeur ayant un angle d'amplitude beta compris entre 0 et 20° est couplé de façon exactement synchrone avec l'entraînement des billes et qu'au moins un détecteur est utilisé.

2. Dispositif selon spécification 1, caractérisé par le fait que les deux rouleaux de cylindre de commande (R) sont orientables et que leur mouvement directeur l'un par rapport à l'autre se produit en opposition de phase avec un décalage de phases de 180 degrés.

3. Dispositif selon spécification 1, caractérisé par le fait que le couplage du mouvement directeur sur les rouleaux de cylindre de commande (R) est produit par des leviers (H) avec l'angle d'oscillation gamma compris entre 0 et 30° sur les axes prolongés de ces rouleaux de cylindre de commande (R), les leviers (H) étant actionnés directement par des dispositifs de déviation reliés au cylindre (Z).

4. Dispositif selon spécification 1, caractérisé par le fait que des moyens sont prévus à l'aide desquels les rouleaux de cylindre de commande (R) appuient sur la surface de la bille (K) en faisant ressort.

5. Dispositif selon spécification 1, caractérisé par le fait que les butées (A) servant à maintenir les billes sont formées par des billes de la même taille placées en amont ou en aval dans le processus technologique.
